# EUROPEAN PATENT APPLICATION

(11) **EP 1 983 267 A2**
(43) Date of publication of application: **22.10.2008**
(21) Application number: 08005919.9
(22) Date of filing: 27.03.2008
(51) Int. Cl.: F24D 3/08, F24D 11/00

(54) **Heating system with solar energy and heating method carried out by means of the same**

(30) Priority: 28.03.2007 IT MI20070615
(71) Applicant: Gruppo Imar S.p.A., 25010 Calcinato (BS) (IT)
(72) Inventor: Corsini, Marco, 25010 Calcinato (BS) (IT); Pennati, Francesco, 25010 Calcinato (BS) (IT); Corsini, Severino, 25010 Calcinato (BS) (IT)
(74) Representative: Bottero, Claudio

(57) **Abstract**

The present invention relates to a heating system (1) with solar energy integration for producing hot primary water for room heating and hot sanitary water comprising: a boiler (2) of the so-called combined type comprising at least one thermal unit (5) for producing hot primary water for room heating and at least one water-water heat exchanger (6) for producing hot sanitary water selectively in thermal exchange relationship with the thermal unit (5); a primary hydraulic circuit (7) for circulating the primary water for room heating between the thermal unit (5) for producing the hot primary water, the water-water heat exchanger (6) and at least one room heating device (U); at least one solar panel (18) for tapping solar light and converting the same into heat; at least one storage tank (19) of the hot primary water for room heating connected to the primary hydraulic circuit (7) and in thermal exchange relationship with the solar panel (18). The invention also relates to a heating method (1) for producing hot primary water for room heating and hot sanitary water which may be carried out by means of the above system.

## Description

### Background of the invention

The present invention relates to a heating system with solar energy integration for producing hot primary water for room heating and hot sanitary water.

This invention also relates to a heating method with solar energy integration for producing hot primary water for room heating and hot sanitary water which may be carried out by means of the aforementioned heating system.

### Related art

In the field of heating systems in general and in particular of those of domestic type, the need is ever increasingly felt of producing hot primary water for room heating and hot sanitary water by exploiting as much as possible the so-called renewable energies, such as for example solar energy, so as to reduce the use of fossil fuels and the consequent environmental impact.

In order to at least partly satisfy this need, heating systems with solar energy integration have been proposed, comprising a boiler of the so-called combined type including at least one thermal unit for producing hot primary water for room heating and at least one water-water heat exchanger for producing hot sanitary water, in which systems a portion of hot sanitary water ready for use is stored in a suitable storage tank connected to the secondary hydraulic circuit (the circuit of the hot sanitary water) and heated by means of at least one solar panel adapted to tap the solar light and convert the same into heat.

The heating systems with solar energy integration of this type possess however a series of drawbacks which have not been overcome to-date.

A first drawback, strongly limiting in view of the ever increasingly reduction of the living spaces under way in the building market, is related to the fact that the secondary hydraulic circuit of the heating systems is maintained at pressures usually comprised between 3 and 8 bars, so that the storage tank of the hot sanitary water must be designed so as to satisfy the stringent requirements regulating the manufacture of containers adapted to resist pressures of this kind. Consequently, the form that can be adopted is invariably cylindrical, with a serious limitation of the maximum tank volume that can be installed in an apartment and which does not generally exceed 60-80 litres.

A second drawback is related to the fact that the heating systems with a storage of hot sanitary water do not allow an easy regulation of the water temperature, which regulation can be obtained by varying the temperature of the hot sanitary water stored in the storage tank, and optionally by mixing the latter with cold water coming from the water supply network.

If on the one hand the thermal inertia of the stored sanitary water does not allow a quick adaptation to the desired temperature value without mixing, on the other hand an effective mixing of hot and cold water can only be obtained by providing suitable devices which complicate the sanitary system from a structural standpoint and increase its cost.

The flexibility of such a regulation, moreover, is limited by the fact that the temperature of the water stored in the storage tank cannot exceed 50-55°C: beyond these values, in fact, extensive lime deposits form on the heating means provided in the storage tank, generally a coil in which a suitable heat carrier liquid that has been heated by the solar panel is circulated.

Additional drawbacks and limitations of structural character of the heating systems provided with a storage of hot sanitary water are also related to the need of periodically cleaning the tank and to the need of ensuring suitable characteristics of the tank from a functional and sanitary point of view.

In order to satisfy these needs, the storage tanks must be made of suitable materials - generally high-grade enamelled steel - having a high cost, they must be suitably sized, as mentioned above, in order to withstand the test pressure of the sanitary circuit of the system, which in some countries is as high as 22 bars and, finally, they must be provided with flanged covers so as to allow their opening during the cleaning operations.

### Summary of the invention

The technical problem underlying the present invention is therefore that of providing a heating system and method with solar energy integration which allow to exploit in the best way the solar energy supply, overcoming at the same time the drawbacks which affect the cited prior art.

According to a first aspect of the invention, this problem is solved by a heating system for producing hot primary water for room heating and hot sanitary water comprising:
- a boiler of a so-called combined type comprising at least one thermal unit for producing hot primary water for room heating and at least one water-water heat exchanger for producing hot sanitary water selectively in thermal exchange relationship with said at least one thermal unit;
- a primary hydraulic circuit for circulating the primary water for room heating between said thermal unit for producing hot primary water, said at least one water-water heat exchanger and at least one room heating device;
- at least one solar panel for tapping solar light and converting the same into heat;
which is characterised in that it further comprises, in said primary hydraulic circuit, at least one storage tank of the hot primary water for room heating in thermal exchange relationship with said at least one solar panel.

Within the framework of the present description and of the subsequent claims, the term: boiler of the so-called combined type, is used to indicate a boiler capable of delivering both hot water for room heating or primary water and hot water for sanitary use.

Within the framework of the present description and of the subsequent claims, the term: primary water for room heating, is used to indicate not only water of the supply network, but also any heat carrier liquid (for example mains water including suitable additives) capable of receiving/transferring heat from/to a thermal source and of transporting heat to different points of a system in which such a liquid circulates.

Within the framework of the present description and of the subsequent claims, the term: thermal unit, is used to indicate a unit comprising at least one burner supplied with a suitable fuel in a gaseous or liquid phase, for example methane or gas oil, and heat-exchange devices, such as for example one or more gas-liquid heat exchangers, adapted to transfer the combustion heat to the primary water for room heating.

Within the framework of the present description and of the subsequent claims, the term: room heating device, is used to indicate any apparatus capable of transferring heat to a room, such as for example a radiator or a radiating floor panel.

According to the present invention, the ability of the heating system to exploit in the best way the solar energy so as to reduce as much as possible the use of fossil fuels in the thermal unit of the boiler, is achieved by accumulating thermal energy of solar origin within a portion of the hot primary water for room heating stored in a storage tank connected to the primary hydraulic circuit and in thermal exchange relationship with the aforementioned at least one solar panel.

In this way, it is advantageously possible to exploit the thermal energy of solar origin by using, as a "carrier" of the accumulated solar energy, the same fluid (the primary water for room heating) which is employed as heating fluid in the boilers of combined type and which is circulated in a circuit, the primary circuit, maintained at a low pressure, generally comprised between 0.5 and 3 bars.

Thanks to this feature, the storage tank is no longer subjected to the stringent requirements requested to the high pressure tanks of the prior art, but can be sized so as to store a considerably greater volume of hot water (for example from 150 to 300 litres) and can be shaped in the most appropriate manner for reducing as much as possible the overall dimensions of the system and optimise the available space.

According to the invention, it is therefore advantageously possible to store volumes of hot primary water capable of permitting the amortisation in a reasonable time period of the greatest installation expenses of a system with solar energy integration with respect to a heating system of conventional type.

This advantageous feature, furthermore, is achieved with a very compact system, which may be housed in a recess having limited depth (for example about 30 cm) obtained in a load-bearing wall or partition wall of a building.

Preferred features of the heating system according to the invention are defined in the attached dependent claims 2-13 the content of which is herein entirely incorporated by reference.

According to a second aspect thereof, the present invention relates to a heating method for producing hot primary water for room heating and hot sanitary water comprising the steps of:
a) circulating the hot primary,water for room heating between at least one thermal unit for producing said hot primary water and at least one water-water heat exchanger for producing hot sanitary water or at least one room heating device;
b) storing a portion of said hot primary water in at least one storage tank;
c) heating said portion of hot primary water stored in said at least one storage tank by means of thermal exchange with at least one solar panel adapted to tap the solar light and convert the same into heat;
d) forwarding at least a part of the portion of hot primary water stored in said at least one storage tank to said thermal unit for producing hot primary water, to said at least one water-water heat exchanger or to said at least one room heating device whenever the temperature of said portion of hot primary water stored in said at least one tank is greater than the temperature of the hot primary water returning to said thermal unit from said at least one water-water heat exchanger or from said at least one room heating device.

Thanks to the aforementioned combination of features and as illustrated above, the heating method of the invention advantageously allows to exploit the solar energy in the best way, reducing as much as possible the use of fossil fuels by accumulating thermal energy of solar origin by storing a portion of the hot primary water for room heating in a tank connected to the primary hydraulic circuit and in thermal exchange relationship with the solar panel.

Such a method advantageously allows to achieve, with a system structure substantially equivalent to that of the boilers and of the heating systems of the prior art, the desired savings of fossil fuels while amortising, in a reasonable time period, the greater installation expenses of a system with solar energy integration with respect to a heating system of conventional type.

As illustrated above, this advantageous feature is achieved by means of a very compact system, which allows to optimise the spaces available in a building.

Preferred features of the heating method according to the invention are defined in the attached dependent claims 15-25 the content of which is herein entirely incorporated by reference.

### Brief description of the drawings

Additional features and advantages of the invention will be better apparent from the detailed description of some preferred embodiments thereof made hereinbelow, for indicative and non-limiting purposes, with reference to the attached drawings. In the drawings:
- Figure 1 shows, in perspective view, a schematic representation of a heating system with solar energy integration according to a preferred embodiment of the present invention;
- Figure 2 shows a simplified hydraulic diagram of the heating system according to the preferred embodiment of figure 1.

### Detailed description of the currently preferred embodiments

In the drawings, a heating system with solar energy integration for producing hot primary water for room heating and hot sanitary water according to a currently preferred embodiment of the invention, is generally indicated at 1.

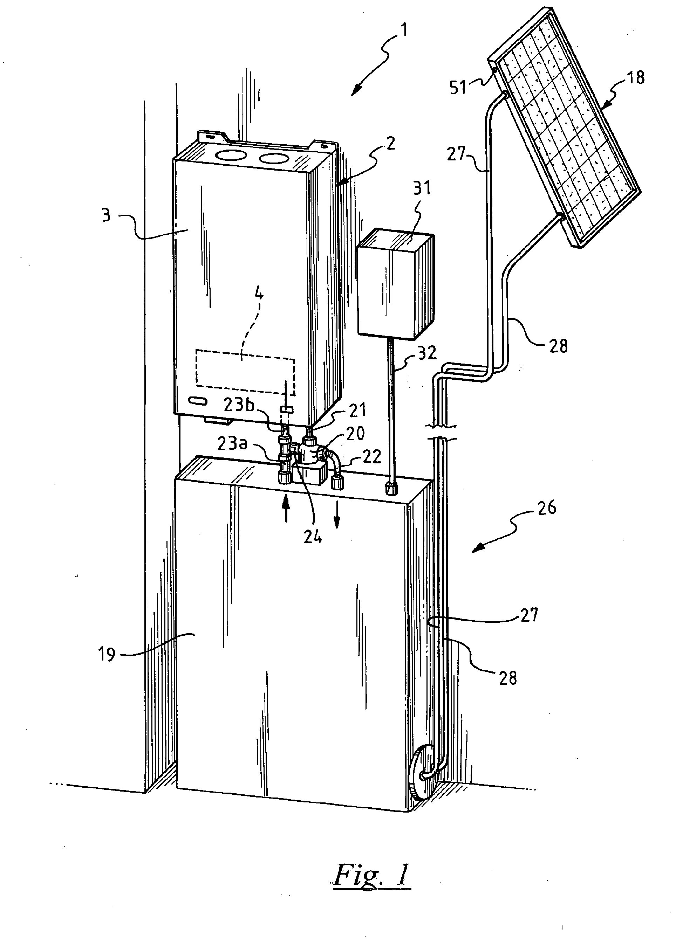

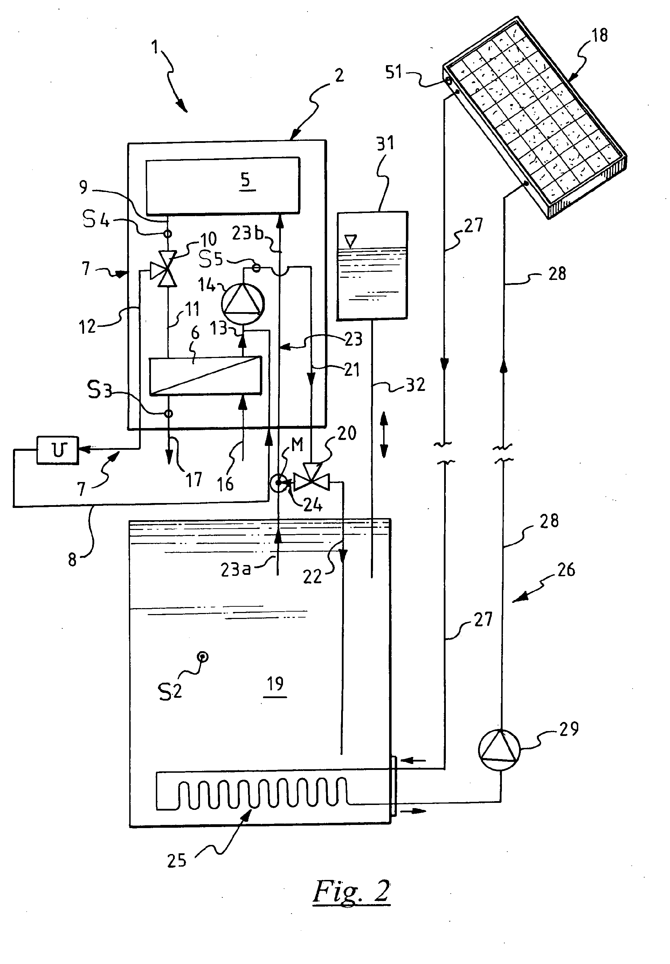

The system 1 comprises a boiler 2 of a so-called combined type, for example a wall-mounted boiler, comprising a substantially parallelepipedic housing 3, in which the various components of the boiler 2 illustrated in a schematic manner in figures 1 and 2 are conventionally supported, which components comprise a control panel 4 including an electronic control unit, known *per se*, for controlling and regulating the boiler 2, at least one thermal unit 5 for producing hot primary water for room heating and at least one water-water heat exchanger 6 for producing hot sanitary water and which is selectively in thermal exchange relationship with the thermal unit 5, as will be better apparent hereinbelow.

The thermal unit 5 comprises, in a way known *per se* and not represented in greater detail in the figures, a combustion chamber in which the combustion of a suitable fuel, for example methane gas, is effected by means of a burner, and a gas-liquid heat exchanger at which a thermal exchange occurs between the combustion gases and the primary water for room heating.

The fuel gas is fed to the burner by means of a feed line equipped with a regulation valve of the fuel flow rate, convention *per se* and not shown in the figures.

Preferably, the thermal unit 5 is of the condensation type, i.e. is capable of recovering the latent heat of condensation of the combustion gases. This allows to impart to the boiler 2 higher efficiencies with respect to those typical of conventional thermal units.

Preferably, the water-water heat exchanger 6 is a plate-type heat exchanger, which has a particularly compact, simple structure, advantageous for limiting the possibility of failures and for facilitating the maintenance operations, such as for example the removal operations of possible sludge deposits in the lower zones of the exchanger.

The system 1 also comprises a primary hydraulic circuit, generally indicated at 7 in the figures, for circulating the primary water for room heating between the thermal unit 5, the water-water heat exchanger 6 and at least one room heating device U, such as for example a radiator conventional *per se*.

The primary hydraulic circuit 7 comprises a return duct 8 to the thermal unit 5 of the primary water coming from a section of the heating system 1 including the room heating device U and a delivery duct 9 from the aforementioned thermal unit 5 to the thermal users (water-water heat exchanger 6 or room heating device U).

The duct 9 is connected to valve means 10, for example a three-way valve, adapted to establish a fluid connection between the thermal unit 5 and either the water-water heat exchanger 6 or the room heating system.

To this end, the primary hydraulic circuit 7 comprises respective ducts 11 and 12.

A further duct 13 ensures a fluid connection of the water-water heat exchanger 6 with at least one circulation pump 14, preferably of the variable flow rate type, adapted to circulate the hot primary water in the primary hydraulic circuit 7 so as to maintain at the highest possible value the temperature difference between the hot primary water leaving and entering the thermal unit 5, so as to favour to the best possible extent the operation of the boiler in the condensation mode.

Within the framework of the preferred embodiment illustrated in figure 2, the return duct 8 of the primary water coming from the room heating section of the system 1 to the thermal unit 5 is connected to the duct 13 upstream of the circulation pump 14.

Within the framework of the present description, the terms: "upstream" and: "downstream" are to be understood as being referred to the circulation direction of the hot primary water for room heating, indicated by the arrows in figure 1.

The primary hydraulic circuit 7 also comprises an expansion vessel of the hot primary water and an automatic vent valve for evacuating the air present in the circuit during the filling phase, conventional *per se* and not shown, both positioned downstream of the thermal unit 5.

In a way conventional *per se*, the water-water heat exchanger 6 is in fluid communication with a secondary hydraulic circuit 15, for withdrawing cold sanitary water from the water supply network and forwarding the hot sanitary water to the users, comprising an inlet duct 16 and an outlet duct 17 from the heat exchanger 6.

The aforementioned ducts 8, 12 of the primary hydraulic circuit and 16, 17 of the secondary hydraulic circuit are provided with connectors, conventional *per se* and not shown, for the connection with a part of the primary hydraulic circuit 7 outside of the boiler 2, which part is provided in turn with corresponding connectors, also not shown, adapted to be sealingly engaged thereon.

According to the invention, the system 1 comprises at least one solar panel 18, convention *per se*, for tapping the solar light and converting the same into heat, and at least one storage tank 19 of the hot primary water for room heating in thermal exchange relationship with the solar panel 18.

The tank 19 is connected to the primary hydraulic circuit 7, with which the tank is in fluid communication by means of valve means 20 adapted to allow a withdrawal of the hot primary water from the tank itself.

Thanks to this feature, the storage tank 19 can be advantageously sized so as to store a volume of hot primary water (for example 150 litres) sufficient to ensure an amortising of the system 1 within a reasonable time period, and can be advantageously shaped in the most appropriate manner for reducing the overall dimensions of the system 1 and to optimise the spaces.

As a mere example, the storage tank 19 can be of parallelepipedic form, as illustrated in figure 1, so that it can be housed together with the boiler 2 in a recess of very limited size (for example: height: 215 cm, width: 150 cm, depth: 24 cm) which can be easily provided in a house or in an apartment.

Preferably, the valve means 20 comprises a mixer valve, preferably of a three-way type, adapted to selectively put the storage tank 19 in fluid communication with the thermal unit 5, the water-water heat exchanger 6 or the room heating device U.

To this end, the primary hydraulic circuit 7 preferably comprises a first duct 21 for connecting the pump 14 to the three-way mixer valve 20, a second duct 22 extending between this valve and a bottom zone of the storage tank 19 and a third duct 23 for providing a fluid connection between the storage tank 19 and the thermal unit 5.

Preferably, the duct 23 is provided with an inlet opening positioned in an upper zone of the tank 19, so as to advantageously exploit the stratification effect of the hot primary water stored in the tank itself.

Within the framework of the preferred embodiment illustrated in figure 2, the three-way mixer valve 20 also allows to by-pass the storage tank 19 as a function of the temperature of the primary water stored therein, as will be explained in greater detail hereinbelow.

To this end, the primary hydraulic circuit 7 preferably comprises a further duct 24 extending between the three-way mixer valve 20 and the duct 23 for providing a fluid connection between the tank 19 and the thermal unit 5.

In this way, the duct 23 is divided in two portions 23a, 23b respectively extending upstream and downstream of a T-shaped fitting between the duct 23 and the connection duct 24 to the three-way mixer valve 20.

Within the framework of the preferred embodiment illustrated, the storage tank 19 is therefore connected, in the primary hydraulic circuit 7, in series to the thermal unit 5, to the water-water heat exchanger 6 and to the room heating device U.

Within the framework of the preferred embodiment illustrated, furthermore, the storage tank 19 is maintained at a pressure substantially equal to the pressure of the primary hydraulic circuit 7, which is generally comprised between 0.5 and 3 bars.

Preferably, the storage tank 19 is in thermal exchange relationship with the solar panel 18 by means of at least one heat exchanger 25 associated to the tank 19 in a way conventional *per se*.

Preferably, the heat exchanger 25 is of a bayonet type, and is positioned near a bottom wall of the storage tank 19 so as to optimise the heating action of the stored primary water for room heating by triggering the aforementioned stratification effect.

Within the framework of the preferred embodiment illustrated, the heating system 1 further comprises a third closed hydraulic circuit, generally indicated at 26, for circulating a suitable heat carrier liquid, for example a mixture of water and ethylene glycol, between the solar panel 18 and the heat exchanger 25 associated to the storage tank 19.

To this end, the hydraulic circuit 26 comprises a delivery duct 27 to the heat exchanger 25 of the heat carrier liquid coming from the solar panel 18, a duct 28 for the return of the heat carrier liquid from the aforementioned heat exchanger 25 to the solar panel 18, as well as a pump 29 mounted on the duct 28 for circulating the heat carrier liquid in the hydraulic circuit 26.

In order to regulate in an optimal way the heating operations, the system 1 preferably comprises a plurality of temperature probes, conventional *per se*, installed in appropriate locations of the primary hydraulic circuit 7.

More precisely, the system 1 comprises:
a probe S 1 adapted to detect the temperature of the heat carrier liquid at the solar panel 18;
a probe S2 adapted to detect the temperature of the hot primary water stored in the storage tank 19,
a probe S3 adapted to detect the temperature of the hot sanitary water leaving the water-water heat exchanger 6;
a probe S4 adapted to detect the temperature of the hot primary water for room heating leaving the thermal unit 5; and
a probe S5 adapted to detect the temperature of the hot primary water returning to the thermal unit 5 and coming from the water-water heat exchanger 6 or from the room heating device U.

In the preferred embodiment illustrated, the heating system 1 further comprises at least one expansion vessel 31 connected to the storage tank 19 in a way conventional *per se,* for example by means of a duct 32.

Preferably, the water for room heating circulating in the primary hydraulic circuit 7 is mains water or water which is at least in part demineralised. The mains water is commonly available at very low cost, while the demineralised water is more expensive but has the advantage of further reducing the abovementioned drawbacks related to the deposition of lime on the heat exchanger walls of the thermal unit 5.

In a preferred embodiment, the water for room heating can further comprise suitable additives, such as for example antifreeze substances, in order to allow the installation of the boiler even in cold environments without the need of supplying heat just to avoid the freezing of the heat carrier liquid.

With reference to the heating system 1 and to the boiler 2 described above and to Figure 2, a heating method for producing hot primary water for room heating and hot sanitary water according to a preferred embodiment of the present invention will now be described.

For the sake of simplicity, the method will be illustrated in a steady-state operating condition of the system 1, both in winter heating mode (room heating mode and production mode of hot sanitary water) and summer heating mode (production of hot sanitary water only).

In a first step, the heating method provides for circulating the hot primary water for room heating between the thermal unit 5 and the water-water heat exchanger 6 or the room heating device U in winter heating mode.

To this end and as a function of the thermal requirements of the users, the electronic control unit will drive the three-way valve 10 in a way known *per se* so as to selectively divert the hot primary water leaving the thermal unit 5 to the water-water heat exchanger 6 or to the room heating device U.

The heating method of the invention then provides for storing a portion of predetermined volume of the hot primary water, for example about 150 litres, in the storage tank 19 and heating the hot primary water stored in the tank by means of thermal exchange with the solar panel 18.

In a preferred embodiment, the step of heating the portion of hot primary water in the storage tank 19 is carried out by means of the heat exchanger 25 associated to the tank, which is in heat exchange relationship with the hot primary water.

Preferably, moreover, this heating step of the hot primary water stored in the storage tank 19 is carried out by circulating the heat carrier liquid in the hydraulic circuit 26 between the solar panel 18 and the heat exchanger 25 associated to the tank 19.

In a preferred embodiment and with the aim of heating the portion of hot primary water stored in the storage tank 19, the heating method of the invention further comprises the steps of:
- detecting the temperature of the heat carrier liquid at the panel 18 by means of the probe S1;
- detecting the temperature of the hot primary water stored in the storage tank 19 by means of the probe S2; and
- circulating the heat carrier liquid between the solar panel 18 and the heat exchanger 25 associated to the tank 19 whenever the temperature of the heat carrier liquid detected by the probe S1 at the panel 18 is greater than the temperature detected by the probe S2 of the hot primary water stored in the storage tank 19.

According to the invention, the heating method then provides for forwarding at least a part of the hot primary water stored in the storage tank 19 to the thermal unit 5, to the water-water heat exchanger 6 or to the room heating device U (in winter heating mode) whenever the temperature of the hot primary water stored in the tank 19, detected by the probe S2, is greater than the temperature, detected by the probe S5, of the hot primary water returning to the thermal unit 5 from the water-water heat exchanger 6 or from the room heating device U.

When such a condition is met, in fact, it is possible to transfer at least a part of the heat accumulated by the hot primary water stored in the tank 19 to the hot primary water returning to the thermal unit 5 from the users (water-water heat exchanger 6 or from the room heating device U).

From an operative point of view, this forwarding step is carried out by the electronic control unit by switching the three-way valve 20 so as to selectively divert to the storage tank 19 an appropriate higher or lower flow rate of the return hot primary water coming from the pump 14.

In this way, a corresponding flow rate of hotter primary hot water leaves the storage tank 19 by means of the duct 23a and is then forwarded to the thermal unit 5 where it may be re-heated with a smaller consumption of combustible gas.

In a preferred embodiment, the heating method may further comprise the step of mixing the hot primary water leaving the storage tank 19 forwarded to the thermal unit 5, to the water-water heat exchanger 6 or to the room heating device U, with a part of the return hot primary water coming from said water-water heat exchanger 6 or from the room heating device U.

Preferably, this mixing step is carried out by means of the mixer valve 20 positioned upstream of the storage tank 19 which diverts part of the hot primary water coming from the pump 14 to the duct 24, so as to define a mixing zone M at the T-shaped fitting between the ducts 23 and 24.

The hot primary water thus heated by the energy supply provided by the hot primary water stored in the tank 19 is then forwarded to the thermal unit 5 where it may optionally be further heated before being re-directed to the thermal user devices (water-water heat exchanger 6 or room heating device U in the winter heating mode).

According to the method of the invention, the optional mixing of the cooler hot primary water coming from the pump 14 with the hotter primary hot water coming from the storage tank 19 and/or the optional further heating of the hot primary water in the thermal unit 5 are carried out as a function of the energy supply required by the user devices and of the temperature of the hot primary water stored in the tank 19.

Thus, for example, in winter heating mode, all of the hot primary water coming from the pump 14 can be forwarded to the storage tank 19 with a subsequent activation of the thermal unit 5, while in summer heating mode the hot primary water coming from the pump 14 can be forwarded to the storage tank 19 and part can be forwarded to the mixing zone M when hot sanitary water is required and the temperature of the hot primary water stored in the tank 19 has reached particularly high values (80-90°C).

In a preferred embodiment, the method of the invention further comprises the steps of:
- detecting by means of the probe S5 the temperature of the hot primary water returning to the thermal unit 5 from the water-water heat exchanger 6 or from the room heating device U;
- detecting the temperature of the hot primary water stored in the storage tank 19 by means of the probe S2; and
- regulating the amount of hot primary water forwarded from the storage tank 19 to the thermal unit 5 as a function of the difference between the temperature of the returning hot primary water and the temperature of the hot primary water stored in the aforementioned storage tank 19.

In this way, the step of forwarding at least a part of the hot primary water stored in the storage tank 19 to the thermal unit 5, to the water-water heat exchanger 6 or to the room heating device U can be carried out by exploiting in an optimal way the heat stored in the tank 19 and coming from the solar energy tapped by the solar panel 18.

Within the framework of the preferred embodiment illustrated herein and if the temperature of the hot primary water stored in the tank 19, detected by the probe S2, is lower than the temperature, detected by the probe S5, of the hot primary water returning to the thermal unit 5 from the water-water heat exchanger 6 or from the room heating device U, the heating method of the invention provides for carrying out the step of temporarily short-circuiting the hot primary water path in a liquid path including the duct 21, the three-way mixer valve 20, the duct 24 and the portion 23b of the duct 23 so as to by-pass the storage tank 19.

In this way, the storage tank 19 is excluded from the circulation of the hot primary water until a quantity of thermal energy sufficient for reducing the fuel consumption of the thermal unit 5 is accumulated again.

In a further preferred embodiment, the method of the invention comprises the steps of:
- detecting by means of the probe S3 the temperature of the hot sanitary water leaving the water-water heat exchanger 6;
- detecting by means of the probe S2 the temperature of the hot primary water stored in the storage tank 19; and
- regulating the amount of hot primary water forwarded from the storage tank 19 to the water-water heat exchanger 6 as a function of the difference between the temperature of the hot sanitary water leaving the water-water heat exchanger 6 and the temperature of the hot primary water stored in the storage tank 19.

In this way, the step of forwarding at least a part of the hot primary water stored in the storage tank 19 to the water-water heat exchanger 6 in the summer operating mode can be carried out by exploiting in an optimal way the heat stored in the tank 19 and coming from the solar energy tapped by the solar panel 18.

Also in this case, if the temperature of the hot primary water stored in the tank 19, detected by the probe S2, is lower than the temperature, detected by the probe S3, of the hot sanitary water leaving the water-water heat exchanger 6, the heating method of the invention provides for carrying out the step of temporarily short-circuiting the path of the hot primary water in a liquid path including the duct 21, the three-way mixer valve 20, the duct 24 and the portion 23b of the duct 23 so as to by-pass the storage tank 19, excluding the withdrawal of the hot primary water from the latter.

Within the framework of the heating method of the invention, the temperature of the room heating water leaving the thermal unit 5 and detected by the temperature probe S4, is preferably adjusted to a value comprised between 25°C and 85°C.

Within the framework of the heating method of the invention, moreover, the temperature of the sanitary water leaving the water-water heat exchanger 6 and detected by the temperature probe S3, is preferably adjusted to a value comprised between 35°C and 55°C.

Within the framework of the heating method of the invention, finally, the aforementioned steps of circulating the hot primary water for room heating between the thermal unit 5 and the water-water heat exchanger 6 or the room heating device U and of forwarding at least a part of the hot primary water stored in the storage tank 19 to the thermal unit 5, the water-water heat exchanger 6 or the room heating device U are preferably carried out by maintaining the primary water for room heating at a pressure comprised between 0.5 and 3 bars, which is the pressure at which the primary hydraulic circuit of a boiler of a conventional heating system is usually maintained.

Advantageously, the heating system and method described above thus allow to exploit the renewable energy of solar origin in the best possible manner and in a very flexible way, proportioned to the contingent thermal needs and to the quantity of heat available at the moment while attaining a considerable reduction of the spaces necessary to house the boiler and the storage tank.

By regulating the flow rate of hot water withdrawn from the storage tank by means of the three-way mixer valve 20, the further advantage is achieved of a gradual exploitation, in any case reduced to a minimum, of the heat accumulated therein.

The system of the invention therefore allows to achieve an optimal exploitation of the heat accumulated in the tank 19, which can be delivered in a metered manner to meet the various thermal needs of the users in an extremely flexible and lasting manner.

Since the heat accumulation occurs by means of the primary water, furthermore, the temperature value which may be reached in the tank 19 (up to 85-90°C) and thus the amount of thermal energy accumulated are much greater than the maximum ones allowed by the known storage boilers, where such temperature is limited due to the known problems related to the formation of lime deposits.

The heat storage by means of the primary water, which is circulated within a circuit at a relatively low pressure, also allows to achieve important additional advantages from a structural standpoint.

The storage tank 19, in fact, can substantially have any suitable shape, is substantially free from maintenance and is entirely free from all the structural and sanitary requirements which the laws impose on storage tanks of hot sanitary water of the boilers of known type.

Such a tank can therefore be made of carbon-steel and in the most varied shapes, so as to best exploit the available space.

Finally, the system of the invention comprises elements of extremely simple construction that can be mass produced at low cost.

Clearly, a man skilled in the art can bring modifications and variants to the heating system and method described above in order to satisfy contingent and specific application requirements, in particular related to the number and type of user hydraulic circuits or to the number and type of thermal units of the boiler. These variants and modifications are in any case all encompassed by the scope of protection as defined by the following claims.

## Claims

1. Heating system (1) for producing hot primary water for room heating and hot sanitary water comprising:
- a boiler (2) of a so-called combined type comprising at least one thermal unit (5) for producing hot primary water for room heating and at least one water-water heat exchanger (6) for producing hot sanitary water selectively in thermal exchange relationship with said at least one thermal unit (5);
- a primary hydraulic circuit (7) for circulating the primary water for room heating between said thermal unit (5) for producing hot primary water, said at least one water-water heat exchanger (6) and at least one room heating device (U);
- at least one solar panel (18) for tapping solar light and converting the same into heat;
**characterised in that** it further comprises, in said primary hydraulic circuit (7), at least one storage tank (19) of the hot primary water for room heating in thermal exchange relationship with said at least one solar panel (18).

2. Heating system (1) according to claim 1, wherein said at least one storage tank (19) of the hot primary water for room heating is in fluid communication with the primary hydraulic circuit (7) by means of valve means (20) adapted to allow a withdrawal of hot primary water from said at least one storage tank (19).

3. Heating system (1) according to claim 2, wherein said valve means (20) comprises a mixer valve adapted to selectively put said at least one storage tank (19) in fluid communication with said thermal unit (5) for producing hot primary water, said at least one water-water heat exchanger (6) or said at least one room heating device (U).

4. Heating system (1) according to claim 1, wherein said at least one storage tank (19) is connected in the primary hydraulic circuit (7) in series to said thermal unit (5) for producing hot primary water, to said at least one water-water heat exchanger (6) and to said at least one room heating device (U).

5. Heating system (1) according to claim 1, wherein said at least one storage tank (19) is in thermal exchange relationship with said at least one solar panel (18) by means of at least one heat exchanger (25) associated to said tank (19).

6. Heating system (1) according to claim 5, wherein said at least one heat exchanger (25) is of bayonet type and is positioned near a bottom wall of said at least one storage tank (19).

7. Heating system (1) according to claim 5 or 6, further comprising a third closed hydraulic circuit (26) for circulating a heat carrier liquid between said at least one solar panel (18) and said at least one heat exchanger (25) associated to the storage tank (19).

8. Heating system (1) according to claim 1, wherein said at least one storage tank (19) is maintained at a pressure substantially equal to the pressure of the primary hydraulic circuit (7).

9. Heating system (1) according to claim 1, further comprising at least one secondary hydraulic circuit (15) for circulating the hot sanitary water.

10. Heating system (1) according to claim 1, further comprising at least one expansion vessel (31) connected to said at least one storage tank (19).

11. Heating system (1) according to claim 1, wherein said at least one water-water heat exchanger (6) for producing hot sanitary water is a plate-type heat exchanger.

12. Heating system (1) according to claim 1, wherein said at least one storage tank (19) of the hot primary water for room heating is adapted to be housed together with said boiler (2) in a recess provided in a building.

13. Heating system (1) according to any one of claims 1-12, wherein said hot primary water for room heating is selected from mains water and water at least in part demineralised, and optionally comprises suitable additives.

14. Heating method for producing hot primary water for room heating and hot sanitary water comprising the steps of:
a) circulating the hot primary water for room heating between at least one thermal unit (5) for producing said hot primary water and at least one water-water heat exchanger (6) for producing hot sanitary water or at least one room heating device (U);
b) storing a portion of said hot primary water in at least one storage tank (19);
c) heating said portion of hot primary water stored in said at least one storage tank (19) by means of thermal exchange with at least one solar panel (18) adapted to tap the solar light and convert the same into heat;
d) forwarding at least a part of the portion of hot primary water stored in said at least one storage tank (19) to said thermal unit (5) for producing hot primary water, to said at least one water-water heat exchanger (6) or to said room heating device (U) whenever the temperature of said portion of hot primary water stored in said at least one storage tank (19) is greater than the temperature of the hot primary water returning to said thermal unit (5) from said at least one water-water heat exchanger (6) or from said at least one room heating device (U).

15. Method according to claim 14, further comprising the step of mixing said at least a part of the portion of hot primary water forwarded from said at least one storage tank (19) to said thermal unit (5), to said at least one water-water heat exchanger (6) or to said at least one room heating device (U), with a part of the hot primary water returning from said at least one water-water heat exchanger (6) or from said at least one room heating device (U).

16. Method according to claim 15, wherein said mixing step is carried out by means of a mixer valve (20) positioned upstream of said at least one storage tank (19).

17. Method according to claim 14, wherein said step c) of heating the portion of hot primary water stored in said at least one storage tank (19) is carried out by means of at least one heat exchanger (25) associated to said tank (19) and in thermal exchange relationship with the stored portion of hot primary water.

18. Method according to claim 17, wherein said at least one heat exchanger (25) is of bayonet type and is positioned near a bottom wall of said at least one storage tank (19).

19. Method according to claim 17, wherein said step c) of heating the portion of hot primary water stored in said at least one storage tank (19) is carried out by circulating a heat carrier liquid between said at least one solar panel (18) and said at least one heat exchanger (25) associated to said tank (19).

20. Method according to claim 19, further comprising the steps of:
- detecting the temperature of the heat carrier liquid at said at least one solar panel (18);
- detecting the temperature of said portion of hot primary water stored in said at least one storage tank (19); and
- circulating the heat carrier liquid between said at least one solar panel (18) and said at least one heat exchanger (25) associated to said tank (19) whenever the temperature of the heat carrier liquid at said at least one panel (18) is greater than the temperature of said portion of hot primary water stored in said at least one storage tank (19).

21. Method according to claim 14, further comprising the steps of:
- detecting the temperature of the hot primary water returning to said thermal unit (5) from said at least one water-water heat exchanger (6) or from said at least one room heating device (U);
- detecting the temperature of the hot primary water stored in said at least one storage tank (19); and
- regulating the amount of hot primary water forwarded from said at least one storage tank (19) to said thermal unit (5) for producing hot primary water as a function of the difference between the temperature of the returning hot primary water and the temperature of the hot primary water stored in said at least one storage tank (19).

22. Method according to claim 14, further comprising the steps of:
- detecting the temperature of the hot sanitary water leaving said at least one water-water heat exchanger (6);
- detecting the temperature of the hot primary water stored in said at least one storage tank (19); and
- regulating the amount of hot primary water forwarded from said at least one storage tank (19) to said at least one water-water heat exchanger (6) as a function of the difference between the temperature of the hot sanitary water leaving said at least one water-water heat exchanger (6) and the temperature of the hot primary water stored in said at least one storage tank (19).

23. Method according to claim 14, further comprising the step of heating the primary water for room heating to a temperature comprised between 25°C and 85°C.

24. Method according to claim 14, further comprising the step of heating the sanitary water to a temperature comprised between 35°C and 55°C.

25. Method according to claim 14, wherein said steps a) and d) are carried out by maintaining the primary water for room heating at a pressure comprised between 0.5 and 3 bars.
